# EUROPEAN PATENT SPECIFICATION

(11) **EP 0 189 209 B1**
(45) Date of publication and mention of the grant of the patent: **16.06.1993**
(21) Application number: 86100937.1
(22) Date of filing: 24.01.1986
(51) Int. Cl.: G03B 41/00

(54) **Radiation image read-out method**
Verfahren zum Auswerten eines Strahlungsbildes
Procédé pour l'évaluation d'une image de radiation

(30) Priority: 25.01.1985 JP 11882/85; 25.01.1985 JP 11883/85
(43) Date of publication of application: 30.07.1986
(73) Proprietor: FUJI PHOTO FILM CO., LTD., Kanagawa-ken, 250-01 (JP)
(72) Inventor: Hara, Makoto c/o Fuji Photo Film Co. Ltd., Kanagawa-ken (JP); Adachi, Yuuma c/o Fuji Photo Film Co. Ltd., Kanagawa-ken (JP); Ishida, Masamitsu c/o Fuji Photo Film Co. Ltd., Kanagawa-ken (JP); Nakajima, Nobuyoshi c/o Fuji Photo Film Co. Ltd., Kanagawa-ken (JP)
(74) Representative: Grünecker, Kinkeldey, Stockmair & Schwanhäusser Anwaltssozietät

(56) References cited:
- EP-A- 0 032 521
- EP-A- 0 111 278
- EP-A- 0 150 834
- JP-A- 5 867 240
- US-A- 4 258 264
- US-A- 4 310 886
- US-A- 4 315 318

## Description

### BACKGROUND OF THE INVENTION

### Field of the Invention

This invention relates to a method of reading out a radiation image in a radiation image recording and reproducing system using a stimulable phosphor sheet.

### Description of the Prior Art

When certain kinds of phosphors are exposed to a radiation such as X-rays, α-rays, β-rays, γ-rays, cathode rays or ultraviolet rays, they store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent No. 4,258,264 and Japanese Unexamined Patent Publication No. 56(1981)-11395, it has been proposed to use a stimulable phosphor in a radiation image recording and reproducing system. Specifically, a sheet provided with a layer of the stimulable phosphor (hereinafter referred to as a stimulable phosphor sheet) is first exposed to a radiation passing through an object to have a radiation image stored therein, and is then scanned with stimulating rays such as a laser beam which cause it to emit light in the pattern of the stored image. The light emitted by the stimulable phosphor sheet upon stimulation thereof is photoelectrically detected and converted to an electric image signal, which is processed as desired to reproduce a visible image on a recording medium such as a photographic film or on a display device such as a cathode ray tube (CRT).

In the aforesaid radiation image recording and reproducing system, when radiation image read-out is conducted by scanning the stimulable phosphor sheet carrying a radiation image of an object stored therein with stimulating rays, detecting light emitted by the stimulable phosphor sheet in proportion to the stored radiation energy during the scanning by use of a photoelectric read-out means, and obtaining an electric image signal used to reproduce a visible image, the read-out should be carried out by use of read-out conditions predetermined appropriately for each image recording.

By the term "read-out conditions" as used herein are meant various conditions affecting the relationship between the amount of the light emitted by the stimulable phosphor sheet at the read-out step and the output of the read-out apparatus, for example, the read-out gain (sensitivity) determining the relationship between the input and the output of the read-out apparatus, and the scale factor (latitude).

When the radiation image read-out is conducted by use of the read-out conditions predetermined appropriately for each image recording, it becomes possible to output the electric image signal so that the necessary object image information is always expressed within the correct density range suitable for viewing, particularly for diagnostic purposes, in the finally reproduced visible image regardless of any fluctuation in the level of the radiation energy stored in the stimulable phosphor sheet, which is caused by changes in the object, the image recording portion thereof, radiation dose, or the like.

The read-out conditions may be adjusted in various manners. For example, the read-out conditions may be adjusted on the basis of the image recording portion of the object such as the head, chest or abdomen, and/or the image recording method such as plain image recording, contrasted image recording, or enlargement image recording. Or, preliminary read-out for approximately detecting the image information stored in the stimulable phosphor sheet may be conducted by use of stimulating rays of a level lower than the level of stimulating rays used in final read-out before the final read-out for detecting the electric image signal used for reproducing the visible image is carried out, and the read-out conditions in the final read-out may be adjusted on the basis of the image information obtained by the preliminary read-out.

The latter method using the preliminary read-out is disclosed, for example, in Japanese Unexamined Patent Publication No. 58(1983)-67240. The electric image signal detected by the final read-out conducted by use of the read-out conditions adjusted in this manner is, for example, sent to an image processing means and is processed in accordance with the image recording portion of the object and/or the image recording method to obtain a visible image suitable for viewing, particularly for diagnostic purposes. The processed image signal is used to reproduce the visible image on a photographic film or the like.

As mentioned above, the level of the stimulating rays used in the preliminary read-out is lower than the level of the stimulating rays used in the final read-out. That is, the effective energy of the stimulating rays which the stimulable phosphor sheet receives per unit area in the preliminary read-out should be lower than the effective energy of the stimulating rays used in the final read-out. In order to make the level of the stimulating rays used in the preliminary read-out lower than the level of the stimulating rays in the final read-out, the output of the stimulating ray source such as a laser beam source may be decreased in the preliminary read-out, or the stimulating rays emitted by the stimulating ray source may be attenuated by an ND filter, an AOM, or the like, positioned in the optical path. Alternatively, a stimulating ray source for the preliminary read-out may be positioned independently of the stimulating ray source for the final read-out, and the output of the former may be made lower than the output of the latter. Or, the beam diameter of the stimulating rays may be increased, the scanning speed of the stimulating rays may be increased, or the moving speed of the stimulable phosphor sheet may be increased in the preliminary read-out.

As the method of adjusting the read-out conditions in the final read-out on the basis of the image information obtained by the preliminary read-out, the applicant proposed in EP-A-0 150 834 (published on 07.08.85) a novel method comprising the steps of: determining a histogram of the preliminary read-out image information, i.e. the amount of light emitted by a stimulable phosphor sheet in preliminary read-out, calculating the maximum light emission amount Smax and the minimum light emission amount Smin of a desired image information range in the histogram, and adjusting the read-out conditions in final read-out so that the maximum light emission amount Smax and the minimum light emission amount Smin correspond respectively to the maximum signal level Qmax and the minimum signal level Qmin of a desired input signal range in the image processing means which are determined by the maximum density Dmax and the minimum density Dmin of a correct density range in the reproduced visible image.

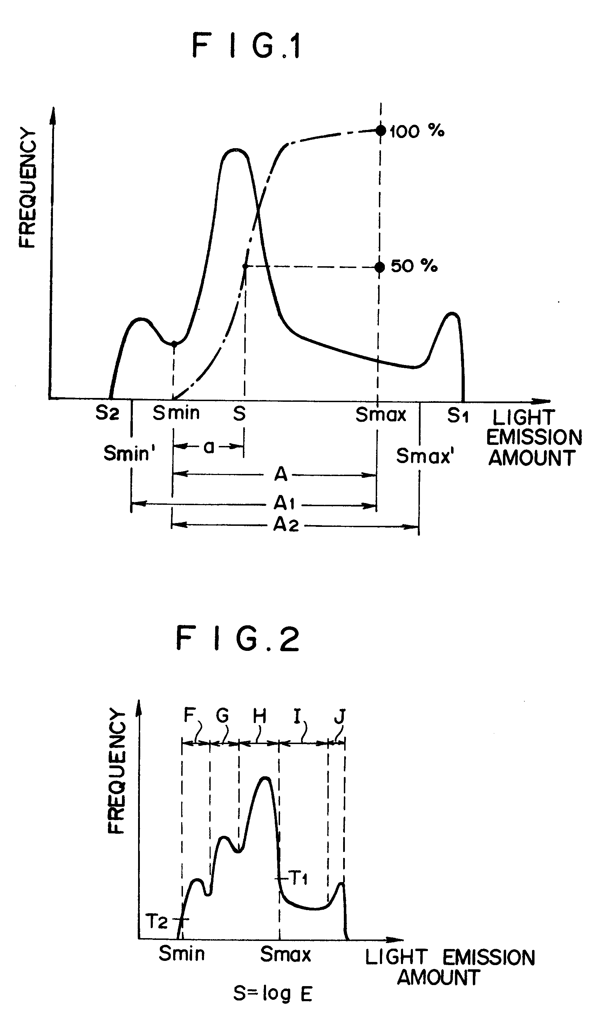

Specifically, in this method, a histogram of the amount of the light emitted by the stimulable phosphor sheet is obtained by the preliminary read-out, and a desired image information range (range of the amount of the emitted light) is determined on the basis of the histogram. Since the pattern of the histogram is approximately fixed by the image recording portion and/or image recording conditions, the desired image information range is determined from the histogram with reference to the image recording portion and/or image recording conditions. For example, in the case of chest image recording, the pattern of the histogram becomes as shown in Figure 2, and it is possible to know that F in the histogram denotes the mediastinum, G denotes the heart, H denotes the lungs, I denotes the skin and the soft tissue, and J denotes region outside of the object. Therefore, from the histogram, it is possible to calculate the maximum light emission amount Smax and the minimum light emission amount Smin defining the desired image information range. For example, when information on the skin and the soft tissue (I) and information on the region outside of the object (J) are unnecessary in Figure 2, the desired image information range becomes that from Smax to Smin including F, G and H as shown. Smax and Smin may be calculated by various methods from the histogram, for example, by determining threshold values T1 and T2 in accordance with the desired image information range and calculating Smax and Smin on the basis of T1 and T2.

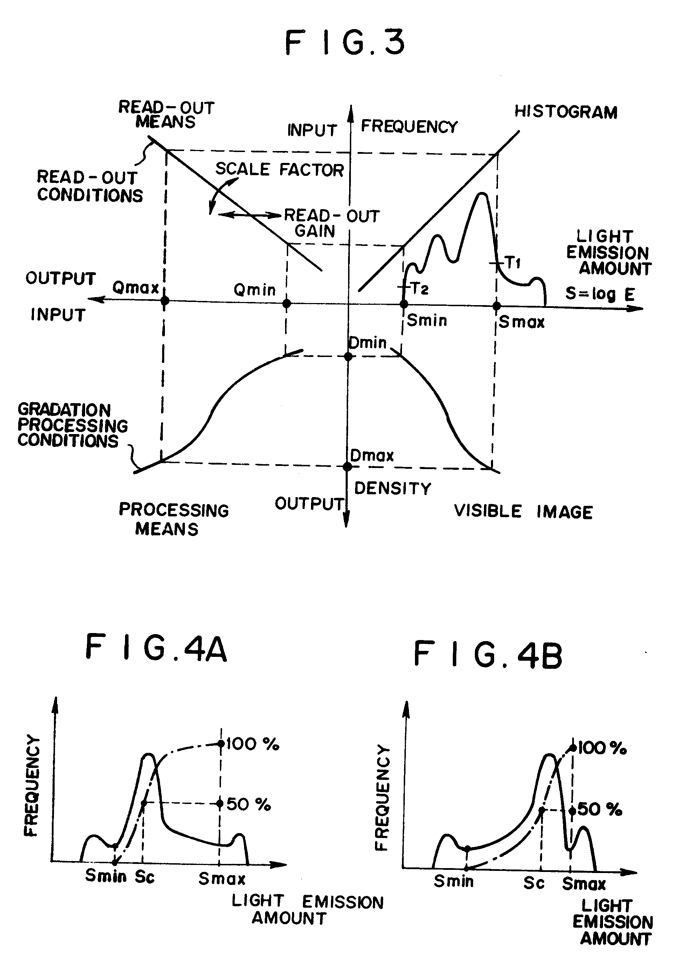

On the other hand, in the aforesaid radiation image recording and reproducing system, an electric image signal is obtained from the light emitted by the stimulable phosphor sheet by use of the read-out conditions with the final read-out means, and is subjected to various signal processings in the image processing means, particularly gradation processing which is conducted by use of gradation processing conditions determined in accordance with the image recording portion and/or image recording conditions. The processed signal is used to reproduce a visible image on a photographic film or the like. The reproduced visible image should have a correct density range suitable for viewing, particularly for diagnostic purposes. In general, the correct density range (Dmax to Dmin) is determined in advance. Desired gradation processing conditions are also determined in advance. Therefore, the range of signal level (Qmax to Qmin) which should be sent to the image processing means as suitable for obtaining the correct density range (Dmax to Dmin) is determined by the gradation processing conditions. Figure 3 shows the relationship between the amount of light emitted by the stimulable phosphor sheet and the density of the reproduced visible image.

Accordingly, the read-out conditions are adjusted so that the maximum light emission amount Smax and the minimum light emission amount Smin calculated as described above correspond to the maximum signal level Qmax and the minimum signal level Omin determined as mentioned above.

However, in the method comprising the steps of determining the desired image information range (Smax to Smin) from the histogram of the preliminary read-out image information, and adjusting the read-out conditions so that the desired image information range (Smax to Smin) corresponds to the correct density range (Dmax to Dmin), the problem as described below arises. For example, as shown in Figures 4A and 4B, there may arise a case in which the desired image information ranges (Smax to Smin) are the same though the distribution of the number of picture elements exhibiting the same light emission amount is markedly different. In this case, the desired image information ranges (Smax to Smin) are output within the same correct density range (Dmax to Dmin). Therefore, in the case of Figure 4A, there are many picture elements exhibiting a relatively low density and the overall image becomes light. In the case of Figure 4B, there are many picture elements exhibiting a relatively high density and the overall image becomes dark.

The aforesaid problem very adversely affects image observation particularly in the case of set image observation. For example, when a plurality of images of the same image recording portion of the same object are recorded as in the case where the image of a barium-filled portion of the stomach and a dual contrasted image of an air portion and a barium-filled portion of the stomach are recorded or where stomach images are recorded by changing the position (standing, lying, etc.) of the object, i.e. the patient, and a plurality of the reproduced visible images are placed side by side and observed together, since the image recording portion and the purpose of diagnosis are the same, the desired image information ranges (Smax to Smin) are the same though the frequency peak positions of the light emission amounts are different between the images. As a result, density fluctuation arises between the reproduced visible images, and the diagnostic accuracy and efficiency are adversely affected.

The aforesaid problem arises not only when the read-out conditions are adjusted based on the histogram of the preliminary read-out image information but also when they are adjusted based on the image recording portion of the object and/or the image recording method.

### SUMMARY OF THE INVENTION

The primary object of the present invention is to provide a method of reading out a radiation image by adjusting in advance the read-out conditions based on a histogram of preliminary read-out information, image recording portion of an object, image recording method, or the like, and conducting final read-out by use of the adjusted read-out conditions, wherein density fluctuation between reproduced visible images is eliminated.

Another object of the present invention is to provide a radiation image read-out method for obtaining uniform visible images suitable for viewing, particularly for diagnostic purposes, in set image observation or the like.

The present invention achieves its aim by a radiation image read-out method including final read-out conducted by use of predeterrmined read-out conditions and carried out by scanning a stimulable phosphor sheet carrying a radiation image stored therein with stimulating rays which cause the stimulable phosphor sheet to emit light in proportion to the stored radiation energy, photoelectrically detecting the emitted light and obtaining an electric image signal for reproducing a visible image, whereby prior to the final read-out, preliminary read-out for detecting the radiation image stored in the stimulable phosphor sheet in order to adjust the read-out conditions is conducted by use of stimulating rays of a level lower than the level of stimulating rays used in the final read-out, the final read-out being conducted by use of the adjusted read-out conditions, characterized by further comprising the steps of:
i) creating a cumulative frequency distribution of a histogram representing the frequency of occurrence of predetermined values of amounts of said light emitted from respective picture elements of said stimulable phosphor sheet, on the basis of measurements obtained by said preliminary read-out,
ii) determining a characteristic value (Sc) of said cumulative frequency distribution, said characteristic value being the light emission amount at a pre-selected percentage of the maximum value of said cumulative frequency distribution,
iii) determining in accordance with said characteristic value (Sc) a subrange (Sc-Smin) of a desired image information range (A), determining the ratio of said subrange to the whole of said image information range, and correcting said image information range in response to said determined ratio,
iv) adjusting said read-out conditions so that said corrected image information range (A) corresponds to a predetermined range of said electric image signals in order to obtain a correct density range in said reproduced visible image.

The characteristic value of the cumulative histogram of the preliminary read-out image information constitutes a reference value for judging whether the number of picture elements exhibiting a high density is larger or smaller than the number of picture elements exhibiting a low density in the radiation image stored in the stimulable phosphor sheet. In the read-out method of the present invention, since the readout conditions are corrected based on the characteristic value, it is possible to obtain uniform visible images free from density fluctuation regardless of variations in density distribution between radiation images stored in the stimulable phosphor sheets, and to improve the image quality, particularly the diagnostic efficiency and accuracy, in set image observation or the like.

By "cumulative histogram" is meant the cumulative frequency distribution.

The cumulative histogram of the preliminary read-out image information may be of the whole preliminary read-out image information or a part thereof, for example, within the desired image information range (Sₘₐₓ to Sₘᵢₙ) determined in advance.

The predetermined read-out conditions may be corrected directly based on the characteristic value, or may be corrected based on a processed value obtained by processing the characteristic value.

The present invention also provides a radiation image read-out method including final read-out conducted by use of predetermined read-out conditions and carried out by scanning a stimulable phosphor sheet carrying a radiation image stored therein with stimulating rays which cause the stimulable phosphor sheet to emit light in proportion to the stored radiation energy, photoelectrically detecting the emitted light and obtaining an electric image signal for reproducing a visible image, whereby prior to the final read-out, preliminary read-out for detecting the radiation image stored in the stimulable phosphor sheet in order to adjust the read-out conditions is conducted by use of stimulating rays of a level lower than the level of stimulating rays used in the final read-out, the final read-out being conducted by use of the adjusted read-out conditions, characterized by further comprising the steps of:
i) creating a cumulative frequency distribution of a histogram representing the frequency of occurrence of predetermined values of amounts of said light emitted from respective picture elements of said stimulable phosphor sheet, on the basis of measurements obtained by said preliminary read-out,
ii) determining at least one characteristic value (Sc) of said cumulative frequency distribution, each of said characteristic values being the light emission amount at a pre-selected percentage of the maximum value of said cumulative frequency distribution,
iii) determining an image information range (A) on the basis of said at least one characteristic value (Sc), said image information range being constituted by predetermined ranges (a1, a2) on both sides of said characteristic value, or a range between two characteristic values,
iv) adjusting said read-out conditions so that said determined image information range corresponds to a predetermined range of said electric image signals in order to obtain a correct density range reproduced visible image.

In the read-out method of the present invention mentioned last, when the image formation range is determined appropriately based on an appropriate characteristic value of the cumulative histogram, the image information range is determined in accordance with the offset condition of the picture element density distribution of each image. Therefore, the read-out conditions adjusted based on the image information range are adjusted in accordance with the offset condition of the picture element density distribution. Since the final read-out is conducted by use of the read-out conditions adjusted in accordance with the offset condition of the picture element density distribution, it is possible to eleminate density fluctuation between reproduced visible images, particularly in set image observation, and to improve the image quality, particularly the diagnostic efficiency and accuracy.

### BRIEF DESCRIPTION OF THE DRAWINGS

Figure 1 is a graph showing the histogram and the cumulative histogram of preliminary read-out image information for explanation of an embodiment of the radiation image read-out in accordance with the present invention,
Figure 2 is a graph showing the step of determining a desired image information range from the histogram of preliminary read-out image information,
Figure 3 is a graph showing the step of adjusting the read-out conditions based on the desired image information range,
Figures 4A and 4B are graphs showing the case where the same desired image information ranges are obtained even though the histograms of preliminary read-out image information are different,
Figure 5 is a graph showing the histogram and the cumulative histogram of preliminary read-out image information for explanation of another embodiment of the radiation image read-out method in accordance with the present invention, and
Figures 6A and 6B are graphs showing the case where the same desired image information ranges are obtained even though the histograms of preliminary read-out image information are different.

### DESCRIPTION OF THE PREFERRED EMBODIMENTS

The present invention will hereinbelow be described in further detail with reference to the accompanying drawings.

In the embodiment described below, preliminary read-out is conducted prior to final read-out, and a histogram of the obtained preliminary read-out image information is created. Read-out conditions in the final read-out are adjusted based on the histogram, and then corrected on the basis of a characteristic value of a cumulative histogram of the preliminary read-out image information.

Specifically, the preliminary read-out is first conducted on a stimulable phosphor sheet carrying a radiation image stored therein. Then, the histogram of the image information, i.e. light emission amounts at respective picture elements, obtained by the preliminary read-out is created, and the read-out conditions are adjusted based on the histogram. Adjustment of the read-out conditions based on the preliminary read-out and the histogram of the preliminary read-out image information may be conducted in the same manner as described above.

The histogram created at the read-out conditions adjusting step and the desired image information range (Smax to Smin) determined on the basis of the histogram are shown in Figure 1.

In the read-out method of the present invention, prior to the final read-out conducted by use of the read-out conditions adjusted in advance in this manner, the preliminary read-out for approximately detecting the radiation image stored in the stimulable phosphor sheet is conducted by use of stimulating rays of a level lower than the level of the stimulating rays used in the final read-out, and a cumulative histogram of the image information obtained by the preliminary read-out is created.

The preliminary read-out for creation of the cumulative histogram is equivalent to the preliminary read-out for adjusting the read-out conditions in advance. Therefore, in this embodiment, the preliminary read-out is not repeated, and the cumulative histogram of the preliminary read-out image information is created by utilizing the image information obtained by the preliminary read-out conducted for adjusting the read-out conditions.

The cumulative histogram may be created over the whole range (S1 to S2) of the preliminary read-out image information. However, in this embodiment, as indicated by the chain line in Figure 1, the cumulative histogram is created only for the desired image information range (Smax to Smin) determined when the read-out conditions are adjusted in advance.

After the cumulative histogram is created in this manner, a characteristic value Sc of the cumulative histogram is determined, and the read-out conditions adjusted in advance are corrected based on the characteristic value Sc.

In this embodiment, the 50% value (preliminary read-out information value at which the cumulative frequency is 50%) is selected as the characteristic value Sc, and the ratio a/A of the image information range a (a=Sc to Smin) to the desired image information range A (A=Smax to Smin) is calculated. When the ratio a/A is smaller than a first threshold value Th1, the minimum image information value Smin of the desired image information range is corrected to a smaller information value Smin' (Smin'<Smin), i.e. the lower end of the desired image information range is shifted by a predetermined amount towards the lower side (towards the smaller light emission amount region). When the ratio a/A is larger than a second threshold value Th2, the maximum image information value Smax of the desired image information range is corrected to a larger information value Smax' (Smax'>Smax), i.e. the upper end of the desired image information range is shifted by a predetermined amount towards the upper side (towards the larger light emission amount region). The read-out conditions are corrected so that the desired image information range A1 or A2 (A1=Smax to Smin', A2=Smax' to Smin) corrected in this manner corresponds to the correct density range (Dmax to Dmin) in a reproduced visible image.

The first threshold value Th1 and the second threshold value Th2 may be selected in accordance with the image recording portion of the object and/or the image recording method. In general, Th1 should preferably be decided to be approximately 1/3 and Th2 is decided to be approximately 2/3. The shift amount of the upper end or lower end of the desired image information range may be determined based on the image recording portion of the object and/or the image recording method or by also considering the ratio of a/A to Th1 or Th2.

When a/A takes a value between Th1 and Th2, correction of the desired image information range is not conducted, and therefore correction of the read-out conditions is not carried out.

By correcting the read-out conditions in the aforesaid manner, it is possible to eliminate density fluctuation between reproduced visible images and to make the image density uniform.

This is because, when the characteristic value of the cumulative histogram, for example, the 50% value Sc, is detected and the position of the characteristic value Sc in the desired image information range (Smax to Smin) is investigated, it is possible to know whether the number of picture elements exhibiting a low density (a small light emission amount) is larger or smaller than the number of picture elements exhibiting a high density (a large light emission amount) within the desired image information range. For example, as shown in Figures 4A and 4B, the 50% characteristic value Sc becomes closer to Smin when the number of low-density picture elements is larger than the number of high-density picture elements, and becomes closer to Smax when the number of high-density picture elements is larger than low-density picture elements.

Accordingly, an appropriate characteristic value is selected from the cumulative histogram, and utilized to detect in an appropriate manner whether the number of high-density picture elements is larger than the number of low-density picture elements or the latter is larger than the former in the desired image information range used when the read-out conditions are adjusted in advance. When the number of low-density picture elements is larger than the number of high-density picture elements, the lower end of the desired image information range is shifted by a predetermined amount towards the low-density region, and the read-out conditions are corrected on the basis of the desired image information range thus corrected, thereby shifting the original desired image information range as a whole towards the high-density region. When the number of high-density picture elements is larger than the number of low-density picture elements, the upper end of the desired image information range is shifted by a predetermined amount towards the high-density region, and the read-out conditions are corrected on the basis of the desired image information range thus corrected, thereby shifting the original desired image information range as a whole towards the low-density region.

The characteristic value may be different from the 50% value, and the read-out conditions may be corrected based on two characteristic values.

The method in accordance with the present invention is applicable also to the case where the desired image information range is determined based on the image recording portion of the object and/or the image recording conditions, and the read-out conditions adjusted on the basis of the desired image information range thus determined are corrected.

In the aforesaid embodiment, the cumulative histogram of the preliminary read-out image information within the desired image information range is created. This is because the level of density at which the image information in the desired image information range is reproduced in the visible image is concerned. For example, when the 50% value is selected as the characteristic value, the 50% value of the cumulative histogram of the image information in the desired image information range is not normally so much different from the 50% value of the desired image information range of the image information of the whole image information range, and there is a correlation between the two 50% values. Therefore, it is also possible to create the cumulative histogram of the whole range of the preliminary read-out image information and to correct the read-out conditions based on the characteristic value of the created cumulative histogram.

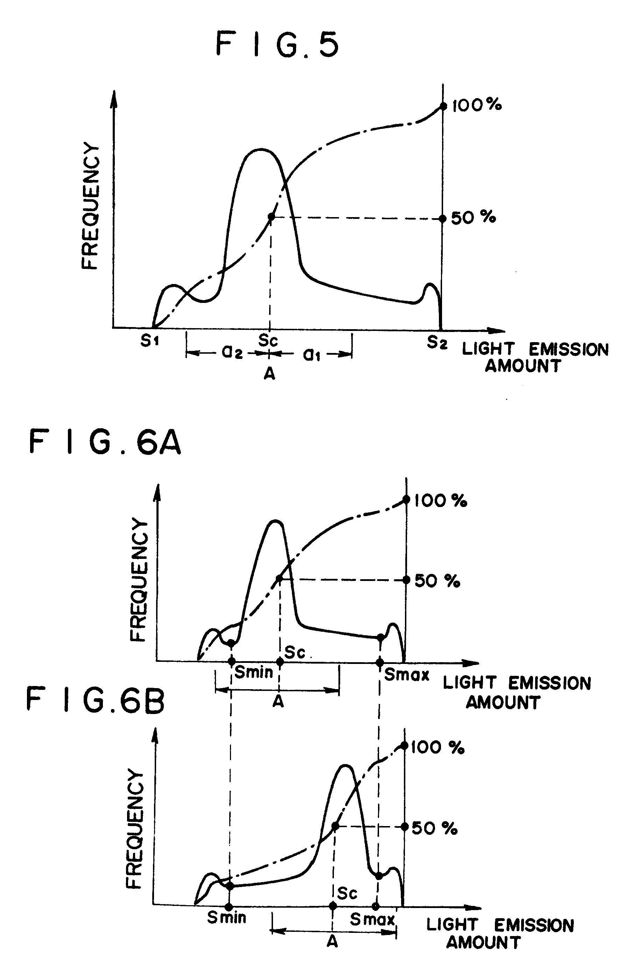

Another embodiment of the radiation image read-out method in accordance with the present invention will hereinbelow be described with reference to Figure 5.

In this embodiment, the preliminary read-out is first conducted on the stimulable phosphor sheet carrying a radiation image stored therein, and then a cumulative histogram of the preliminary read-out image information is created. Figure 5 shows the histogram (solid line) and the cumulative histogram (chain line) of the preliminary read-out image information. The cumulative histogram is created over the whole range (S1 to S2) of the preliminary read-out image information. However, the cumulative histogram may be created only over the preliminary read-out image information within a partial range predetermined based on the image recording portion of the object and/or the image recording method.

Thereafter, the characteristic value Sc of the cumulative histogram of the preliminary read-out image information is selected, and an image information range is determined based on the characteristic value Sc.

In this embodiment, the 50% value is selected as the characteristic value Sc, and predetermined ranges a1 and a2 are taken from the characteristic value Sc towards the larger and smaller light emission amount sides as shown in Figure 5. The range A (A=Sc-a2 to Sc+a1) is determined as the image information range.

The characteristic value Sc and the predetermined ranges a1, a2 may be selected in any manner, for example, on the basis of the image recording portion of the object and/or the image recording method. Of course, a1 may be equal to a2.

The image information range A may be determined based on Sc in various other manners, for example, by selecting two characteristic values Sc, Sc and determining the range between the two characteristic values Sc, Sc as the image information range.

After the image information range A is determined as described above, the read-out conditions are adjusted so that the determined image information range A corresponds to a predetermined electric image signal range.

The electric image signal range may be determined in any manner based on the image recording portion of the object, the image recording method, the viewing purpose and various other conditions. In this embodiment, the input signal level range (Qmax to Qmin) to the image processing means, which corresponds to the correct density range (Dmax to Dmin) in the reproduced visible image, is determined as the electric image signal range. The read-out conditions are adjusted so that the determined image information range A (A=Sc-a2 to Sc+a1) corresponds to the predetermined electric image signal range (Qmin to Qmax), i.e. so that the light emission amount Sc-a2 is output as the electric image signal Qmin from the photoelectric read-out means and the light emission amount Sc+a1 is output as the electric image signal Qmax.

After the read-out conditions are adjusted in this manner, the final read-out is conducted by use of the adjusted read-out conditions, and electric image signals for reproducing a visible image are obtained.

By adjusting the read-out conditions as described above and conducting the final read-out by use of the adjusted read-out conditions, it is possible to eliminate density fluctuation between reproduced visible images and to make the image density uniform.

This is because the 50% characteristic value of the cumulative histogram represents the center of the picture element density distribution and changes as the picture element density distribution changes as described above. Therefore, when the image information range is determined based on the 50% characteristic value, it is determined in accordance with of the offset condition of the picture element density distribution. As a result, when the read-out conditions are adjusted based on the determined image information range, they become the ones adjusted on the basis of the offset condition of the picture element density distribution. This will be clear from Figures 6A and 6B. When the number of low-density picture elements are comparatively large in an image, the image information range is determined in a low-density region as shown in Figure 6A. When the number of high-density picture elements is comparatively large in an image, the image information range is determined in a high-density region as shown in Figure 6B.

## Claims

1. A radiation image read-out method including final read-out conducted by use of predetermined read-out conditions and carried out by scanning a stimulable phosphor sheet carrying a radiation image stored therein with stimulating rays which cause the stimulable phosphor sheet to emit light in proportion to the stored radiation energy, photoelectrically detecting the emitted light and obtaining an electric image signal for reproducing a visible image, wherein prior to said final read-out, preliminary read-out for detecting the radiation image stored in said stimulable phosphor sheet in order to adjust the read-out conditions is conducted by use of stimulating rays of a level lower than the level of stimulating rays used in said final read-out, said final read-out being conducted by use of said adjusted read-out conditions,
**characterised by**
further comprising the steps of:
i) creating a cumulative frequency distribution of a histogram representing the frequency of occurrence of predetermined values of amounts of said light emitted from respective picture elements of said stimulable phosphor sheet, on the basis of measurements obtained by said preliminary read-out,
ii) determining a characteristic value (Sc) of said cumulative frequency distribution, said characteristic value being the light emission amount at a pre-selected percentage of the maximum value of said cumulative frequency distribution,
iii) determining in accordance with said characteristic value (Sc) a subrange (Sc-Smin) of a desired image information range (A), determining the ratio of said subrange to the whole of said image information range, and correcting said image information range in response to said determined ratio,
iv) adjusting said read-out conditions so that said corrected image information range (A) corresponds to a predetermined range of said electric image signals in order to obtain a correct density range in said reproduced visible image.

2. A method as defined in claim 1 wherein said cumulative frequency distribution of said histogram is created only for said desired image information range (A) reaching from a maximum light emission amount (Sₘₐₓ) to a minimum light emission amount (Sₘᵢₙ), determined based on the image information obtained by said preliminary read-out.

3. A method as defined in claim 1 wherein a 50% value at which the cumulative frequency is 50% in said cumulative frequency distribution is selected as said characteristic value.

4. A method as defined in claim 2 wherein said ratio is determined as a ratio of the image information range between said characteristic value (Sc) and said minimum light emission amount (Sₘᵢₙ) to said desired image information range (Sₘₐₓ to Sₘᵢₙ), the lower end of said desired image information range (Sₘₐₓ to Sₘᵢₙ) is shifted towards the small light emission amount region when said ratio is smaller than a first threshold value, the upper end of said desired image information range (Sₘₐₓ to Sₘᵢₙ) is shifted towards the large light emission amount region when said ratio is larger than a second threshold value, and said predetermined read-out conditions are corrected so that the desired image information range obtained by said shifting corresponds to a correct density range reaching from a maximum density (Dₘₐₓ) to a minimum density (Dₘᵢₙ), in said reproduced visible image.

5. A method as defined in claim 4 wherein said first threshold value is 1/3 and said second threshold value is 2/3.

6. A radiation image read-out method including final read-out conducted by use of predetermined read-out conditions and carried out by scanning a stimulable phosphor sheet carrying a radiation image stored therein with stimulating rays which cause the stimulable phosphor sheet to emit light in proportion to the stored radiation energy, photoelectrically detecting the emitted light and obtaining an electric image signal for reproducing a visible image, wherein prior to said final read-out, preliminary read-out for detecting the radiation image stored in said stimulable phosphor sheet in order to adjust the read-out conditions is conducted by use of stimulating rays of a level lower than the level of stimulating rays used in said final read-out, said final read-out being conducted by use of said adjusted read-out conditions,
**characterised by**
further comprising the steps of:
i) creating a cumulative frequency distribution of a histogram representing the frequency of occurrence of predetermined values of amounts of said light emitted from respective picture elements of said stimulable phosphor sheet, on the basis of measurements obtained by said preliminary read-out,
ii) determining at least one characteristic value (Sc) of said cumulative frequency distribution, each of said characteristic values being the light emission amount at a pre-selected percentage of the maximum value of said cumulative frequency distribution,
iii) determining an image information range (A) on the basis of said at least one characteristic value (Sc), said image information range being constituted by predetermined ranges (a1, a2) on both sides of said characteristic value, or a range between two characteristic values,
iv) adjusting said read-out conditions so that said determined image information range corresponds to a predetermined range of said electric image signals in order to obtain a correct density range in said reproduced visible image.

7. A method as defined in claim 6 wherein a 50% value at which the cumulative frequency is 50% in said cumulative frequency distribution is selected as said characteristic value.

8. A method as defined in claim 6 wherein the sum of said predetermined ranges (a1, a2) is determined as said image information range.

9. A method as defined in claim 6, 7 or 8 wherein a desired input signal level range, reaching from a maximum signal level (Qₘₐₓ) to a minimum signal level (Qₘᵢₙ) in an image processing means, which corresponds to a correct density range, reaching from a maximum density (Dₘₐₓ) to a minimum density (Dₘᵢₙ) in said reproduced visible image, is selected as said predetermined electric image signal range.

## Patentansprüche

1. Ein Strahlungsbildausleseverfahren, welches eine Endauslesung, die unter Verwendung vorbestimmter Auslesebedingungen erfolgt und durch Abtasten einer stimulierbaren, ein darin gespeichertes Strahlungsbild tragenden Phosphorfolie mit stimulierenden Strahlen, welche die stimulierbare Phosphorfolie veranlassen, Licht proportional zu der gespeicherten Strahlungsenergie zu emittieren, durchgeführt wird, photoelektrisches Erfassen des emittierten Lichts und Ermitteln eines elektrischen Bildsignals zum Reproduzieren eines Strahlungsbildes, enthält, wobei vor der Endauslesung eine vorläufige Auslesung zum Erfassen des in der stimulierbaren Phosphorfolie gespeicherten Strahlungsbildes, um die Auslesebedingungen einzustellen, unter Verwendung von stimulierenden Strahlen eines Niveaus, welches niedriger als das Niveau der bei der Endauslesung verwendeten stimulierenden Strahlen ist, durchgeführt wird, wobei die Endauslesung unter Verwendung der eingestellten Auslesebedingungen durchgeführt wird,
**gekennzeichnet durch**
die weiteren Verfahrensschritte:
i) Erzeugen einer kumulativen Häufigkeitsverteilung von einem Histogramm, welche die Häufigkeit des Auftretens vorbestimmter Mengenwerte des von jeweiligen Bildelementen der stimulierbaren Phosphorfolie emittierten Lichts repräsentiert, auf der Basis von Meßwerten, die bei der vorläufigen Auslesung erhalten werden,
ii) Bestimmen eines charakteristischen Wertes (Sc) der kumulativen Häufigkeitsverteilung, wobei der charakteristische Wert die Lichtemissionsmenge bei einem vorgewählten Prozentsatz des Maximalwertes der kumulativen Häufigkeitsverteilung ist,
iii) Bestimmen, entsprechend dem charakteristischen Wert (Sc), eines Unterbereichs (Sc-Smin) von einem gewünschten Bildinformationsbereich (A), Bestimmen des Verhältnisses des Unterbereichs zur Gesamtheit des Bildinformationsbereichs, und Korrigieren des Bildinformationsbereichs in Reaktion auf das bestimmte Verhältnis,
iv) Einstellen der Auslesebedingungen derart, daß der korrigierte Bildinformationsbereich (A) einem vorbestimmten Bereich der elektrischen Bildsignale entspricht, um einen korrekten Dichtebereich in dem reproduzierten sichtbaren Bild zu erhalten.

2. Ein Verfahren nach Anspruch 1, wobei die kumulative Häufigkeitsverteilung von dem Histogramm nur für den gewünschten Bildinformationsbereich (A), welcher von einer maximalen Lichtemissionsmenge (Sₘₐₓ) zu einer minimalen Lichtemissionsmenge (Sₘᵢₙ) reicht, und welcher basierend auf der durch die vorläufige Auslesung erhaltenen Bildinformation bestimmt wird.

3. Ein Verfahren nach Anspruch 1, wobei ein 50%-Wert, bei welchem die kumulative Häufigkeit in der kumulativen Häufigkeitsverteilung 50% beträgt, als der charakteristische Wert ausgewählt wird.

4. Ein Verfahren nach Anspruch 2, wobei das Verhältnis als ein Verhältnis von dem Bildinformationsbereich zwischen dem charakteristischen Wert (Sc) und der minimalen Lichtemissionsmenge (Sₘᵢₙ) zu dem gewünschten Bildinformationsbereich (Sₘₐₓ bis Sₘᵢₙ) bestimmt wird, wobei das untere Ende des gewünschten Bildinformationsbereichs (Sₘₐₓ bis Sₘᵢₙ) in Richtung zu der Region geringer Lichtemissionsmenge verschoben wird, wenn das Verhältnis kleiner als ein Schwellenwert ist, das obere Ende des gewünschten Bildinformationsbereichs (Sₘₐₓ bis Sₘᵢₙ) in Richtung zu der Region großer Lichtemissionsmenge verschoben wird, wenn das Verhältnis größer als ein zweiter Schwellenwert ist, und die vorbestimmten Auslesebedingungen derart korrigiert werden, daß der gewünschte Bildinformationsbereich, der durch die Verschiebung erhalten wird, einem korrekten Dichtebereich, der von einer Maximaldichte (Dₘₐₓ) zu einer Minimaldichte (Dₘᵢₙ) reicht, in dem reproduzierten sichtbaren Bild entspricht.

5. Ein Verfahren nach Anspruch 4, wobei der erste Schwellenwert ein Drittel und der zweite Schwellenwert zwei Drittel beträgt.

6. Ein Strahlungsbildausleseverfahren, welches eine Endauslesung, die unter Verwendung vorbestimmter Auslesebedingungen erfolgt und durch Abtasten einer ein darin gespeichertes Strahlungsbild tragenden Phosphorfolie mit stimulierenden Strahlen, welche die stimulierbare Phosphorfolie veranlassen, Licht proportional zu der gespeicherten Strahlungsenergie zu emittieren, durchgeführt wird, das photoelektrische Erfassen des emittierten Lichts und das Ermitteln eines elektrischen Bildsignals zum Reproduzieren eines sichtbaren Bildes enthält, wobei vor der Endauslesung eine vorläufige Auslesung zum Erfassen des in der stimulierbaren Phosphorfolie gespeicherten Strahlungsbildes, um die Auslesebedingungen einzustellen, unter Verwendung stimulierbarer Strahlen eines Niveaus, das niedriger als das Niveau der bei der Endauslesung verwendeten stimulierenden Strahlen ist, durchgeführt wird, wobei die Endauslesung unter Verwendung der eingestellten Auslesebedingungen durchgeführt wird,
**gekennzeichnet durch**
die weiteren Verfahrensschritte:
i) Erzeugen einer kumulativen Häufigkeitsverteilung von einem Histogramm, welche die Häufigkeit des Auftretens vorbestimmter Mengenwerte des von jeweiligen Bildelementen der stimulierbaren Phosphorfolie emittierten Lichts repräsentiert, auf der Basis von Meßwerten, die durch die vorläufige Auslesung erhalten werden,
ii) Bestimmen wenigstens eines charakteristischen Wertes (Sc) von der kumulativen Häufigkeitsverteilung, wobei jeder der charakteristischen Werte die Lichtemissionsmenge bei einem vorausgewählten Prozentsatz von dem Maximalwert der kumulativen Häufigkeitsverteilung ist,
iii) Bestimmen eines Bildinformationsbereichs (A) auf der Basis des wenigstens einen charakteristischen Wert (Sc), wobei der Bildinformationsbereich durch vorbestimmte Bereich (a1, a2) auf beiden Seiten des charakteristischen Wertes, oder einen Bereich zwischen zwei charakteristischen Werten gebildet wird,
iv) Einstellen der Auslesebedingungen derart, daß der vorbestimmte Bildinformationsbereich einem vorbestimmten Bereich der elektrischen Bildsignale entspricht, um einen korrekten Dichtebereich in dem reproduzierten sichtbaren Bild zu erhalten.

7. Ein Verfahren nach Anspruch 6, wobei ein 50%-Wert, bei welchem die kumulative Häufigkeit in der kumulativen Häufigkeitsverteilung 50% beträgt, als der charakteristische Wert ausgewählt wird.

8. Ein Verfahren nach Anspruch 6, wobei die Summe der vorbestimmten Bereiche (a1, a2) als der Bildinformationsbereich bestimmt wird.

9. Ein Verfahren nach Anspruch 6, 7 oder 8, wobei ein gewünschter Eingangssignalpegelbereich, welcher von einem maximalen Signalpegel (Qₘₐₓ) zu einem minimalen Signalpegel (Qₘᵢₙ) in einer Bildverarbeitungseinrichtung, und welcher einem korrekten Dichtebereich, welcher von einer maximalen Dichte (Dₘₐₓ) zu einer minimalen Dichte (Dₘᵢₙ) in dem reproduzierten sichterbaren Bild reicht, entspricht, als der vorbestimmte elektrische Bildsignalbereich ausgewählt wird.

## Revendications

1. Procédé de lecture d'une image de rayonnement , comprenant une lecture finale conduite dans des conditions de lecture prédéterminées et effectuée par balayage d'une feuille luminescente stimulable, dans laquelle est stockée une image de rayonnement, avec des rayons de stimulation qui provoquent l'émission par la feuille luminescente stimulable d'une lumière proportionnelle à l'énergie de rayonnement stockée , détection photoélectrique de la lumière émise et obtention d'un signal électrique d'image pour reproduire une image visible, dans lequel, avant ladite lecture finale, une lecture préliminaire pour détecter l'image de rayonnement stockée dans ladite feuille luminescente stimulable, afin d'ajuster les conditions de lecture, est effectuée au moyen de rayons de stimulation d'un niveau inférieur au niveau des rayons de stimulation utilisés dans la dite lecture finale, ladite lecture finale étant effectuée en utilisant lesdites conditions de lecture ajustées,
caractérisé en ce qu'il comprend en outre les étapes de :
(i) création d'une distribution de fréquence cumulative d'un histogramme représentant la fréquence d'apparition de valeurs prédéterminées des quantités de ladite lumière émise par des éléments d'image respectifs de ladite feuille luminescente stimulable, sur la base des mesures fournies par ladite lecture préliminaire,
(ii) détermination d'une valeur caractéristique (Sc) de ladite distribution de fréquence cumulative, la dite valeur caractéristique étant la quantité d'émission de lumière à un pourcentage prédéterminé de la valeur maximale de ladite distribution de fréquence cumulative,
(iii) détermination, en fonction de ladite valeur caractéristique (Sc), d'une sous-plage (Sc-Smin) d'une plage d'information d'image désirée (A), détermination du rapport de ladite sous-plage à la totalité de la dite plage d'information d'image, et correction de ladite plage d'information d'image en réponse audit rapport déterminé,
(iv) ajustement desdites conditions de lecture de sorte que ladite plage d'information d'image corrigée (A) corresponde à une plage prédéterminée desdits signaux électriques d'image, afin d'obtenir une plage de densité correcte dans ladite image visible reproduite.

2. Procédé suivant la revendication 1, dans lequel ladite distribution de fréquence cumulative dudit histogramme est créée seulement pour ladite plage d'information d'image désirée (A) allant d'une quantité maximale d'émission de lumière (Smax) à une quantité minimale d'émission de lumière (Smin), déterminées sur la base de l'information d'image fournie par la dite lecture préliminaire.

3. Procédé suivant la revendication 1, dans lequel une valeur de 50%, à laquelle la fréquence cumulative est à 50% dans ladite distribution de fréquence cumulative, est choisie comme dite valeur caractéristique.

4. Procédé suivant la revendication 2, dans lequel ledit rapport est déterminé comme étant un rapport de la plage d'information d'image, entre ladite valeur caractéristique (Sc) et ladite quantité minimale d'émission de lumière (Smin), à ladite plage d'information d'imge désirée (Smax à Smin), l'extrémité inférieure de la dite plage d'information d'image désirée (Smax à Smin) est décalée vers la région de petite quantité d'émission de lumière lorsque ledit rapport est plus petit qu'une première valeur de seuil, l'extrémité supérieure de la dite plage d' information d'image désirée (Smax à Smin) est décalée vers la région de grande quantité d'émission de lumière lorsque ledit rapport est plus grand qu'une deuxième valeur de seuil, et lesdites conditions de lecture prédéterminées sont corrigées de sorte que la plage d'information d'image désirée, obtenue par ledit décalage, corresponde à une plage de densité correcte allant d'une densité maximale (Dmax) à une densité minimale (Dmin), dans ladite image visible reproduite.

5. Procédé suivant la revendication 4, dans lequel ladite première valeur de seuil est 1/3 et ladite deuxième valeur de seuil est 2/3.

6. Procédé de lecture d'une image de rayonnement, comprenant une lecture finale conduite dans des conditions de lecture prédéterminées et effectuée par balayage d'une feuille luminescente stimulable, dans laquelle est stockée une image de rayonnement, avec des rayons de stimulation qui provoquent l'émission par la feuille luminescente stimulable d'une lumière proportionnelle à l'énergie de rayonnement stockée, détection photoélectrique de la lumière émise et obtention d'un signal électrique d'image pour reproduire une image visible, dans lequel, avant ladite lecture finale, une lecture préliminaire pour détecter l'image de rayonnement stockée dans ladite feuille luminescente stimulable, afin d'ajuster les conditions de lecture, est effectuée au moyen de rayons de stimulation d'un niveau inférieur au niveau des rayons de stimulation utilisés dans ladite lecture finale, ladite lecture finale étant effectuée en utilisant lesdites conditions de lecture ajustées,
caractérisé en ce qu'il comprend en outre les étapes de :
(i) création d'une distribution de fréquence cumulative d'un histogramme représentant la fréquence d'apparition de valeurs prédéterminées des quantités de ladite lumière émise par des éléments d'image respectifs de ladite feuille luminescente stimulable, sur la base des mesures fournies par ladite lecture préliminaire,
(ii) détermination d'au moins une valeur caractéristique (Sc) de ladite distribution de fréquence cumulative, chacune desdites valeurs caractéristiques étant la quantité d'émission de lumière à un pourcentage prédéterminé de la valeur maximale de ladite distribution de fréquence cumulative,
(iii) détermination d'une plage d'information d'image (A) sur la base de ladite au moins une valeur caractéristique (Sc), ladite plage d'information d'image étant constituée par des plages prédéterminées (a1, a2) de part et d'autre de ladite valeur caractéristique, ou par une plage comprise entre deux valeurs caractéristiques, et
(iv) ajustement desdites conditions de lecture de sorte que ladite plage d'information d'image déterminée corresponde à une plage prédéterminée desdits signaux électriques d'image, afin d'obtenir une plage de densité correcte dans ladite image visible reproduite.

7. Procédé suivant la revendication 6, dans lequel une valeur de 50% , à laquelle la fréquence cumulative est de 50% dans ladite distribution de fréquence cumulative, est choisie comme dite valeur caractéristique.

8. Procédé suivant la revendication 7 , dans lequel la somme desdites plages prédéterminées (a1, a2) est déterminée comme étant ladite plage d'information d'image.

9. Procédé suivant la revendication 6, 7 ou 8, dans lequel une plage de niveau de signal d'entrée désiré, allant d'un niveau de signal maximal(Qmax) à un niveau de signal minimal (Qmin) dans des moyens de traitement d'image, qui correspond à une plage de densité correcte allant d'une densité maximale (Dmax) à une densité minimale (Dmin) dans ladite image visible reproduite, est choisie comme dite plage de signal électrique d'image prédéterminée.
